# FASCICULE DE BREVET EUROPEEN

(11) **EP 1 477 355 B1**
(45) Date de publication et mention de la délivrance du brevet: **06.10.2010**
(21) Numéro de dépôt: 04364030.9
(22) Date de dépôt: 06.04.2004
(51) Int. Cl.: B60J 10/08, B60J 10/04, B60J 10/06, B60J 10/00, B60J 5/04

(54) **Porte de vèhicule comprenant des moyens d'inviolabilitè de la partie supèrieure d'une vitre affleurante, extension d'inviolabilitè et vèhicule correspondants.**
Autotür mit Schutztsmitteln des oberen Bereichs einer flachmontierten Scheibe, Erweiterung des Schutzes und Fahrzeug hierzu.
Vehicle door with inviolability means of the higher part of a flush glass, extension of inviolability and corresponding vehicle.

(30) Priorité: 16.04.2003 FR 0304797
(43) Date de publication de la demande: 17.11.2004
(73) Titulaire: Advanced Comfort Systems France - ACS France, 79300 Bressuire (FR)
(72) Inventeur: Moreau, Stéphane, 79700 Le Temple (FR)
(74) Mandataire: Vidon, Patrice

(56) Documents cités:
- WO-A-02/06070
- DE-A- 10 122 637
- FR-A- 2 664 861
- US-B1- 6 244 601
- US-B1- 6 439 641

## Description

Le domaine de l'invention est celui des véhicules automobiles, et plus précisément des portes de véhicule équipées d'une vitre, ou plus généralement d'un panneau, mobile et affleurant.

Plus précisément encore, l'invention concerne la sécurisation contre les tentatives d'effraction, c'est-à-dire l'amélioration de l'inviolabilité, de telles portes.

Dans les portes de véhicule classiques, la vitre coulissante est montée dans un cadre qui fait généralement partie de la carrosserie de la porte. En position fermée, la vitre vient donc s'inscrire dans un logement défini par ce cadre, il est alors peu aisé d'introduire un outil ou tout autre objet le long de cette vitre, et on considère en général que l'inviolabilité est assurée de façon suffisante.

Pour des raisons d'esthétique notamment, il est souvent souhaité de supprimer ce cadre, de façon à obtenir des vitres qui se trouvent directement dans le plan de la carrosserie, sans élément introduisant des discontinuités, au moins visuelles. De tels systèmes sont dits affleurants, ou « flush » en anglais, et sont générallement connus.

Ainsi, le titulaire de la présente demande de brevet a récemment proposé une technique selon laquelle la porte d'un véhicule est munie d'un cadre de fenêtre intégralement recouvert, vue de l'extérieur, par une ou plusieurs vitres, dont l'une au moins est coulissante. Des techniques spécifiques pour optimiser le coulissement d'une part et faciliter le montage d'autre part ont fait l'objet des demandes de brevet FR-02 14611 et FR-02 14612, non publiées à la date de dépôt de la présente demande de brevet.

L'absence d'un cadre venant chevaucher le chant de la vitre mobile en partie supérieure introduit cependant un risque. Il est en effet a priori plus facile d'introduire un outil le long du chant supérieur de la vitre, par exemple pour tenter de déverrouiller la porte et de pénétrer à l'intérieur du véhicule. Ce risque est d'autant plus important dans le cas où la vitre n'est pas simplement coulissante en translation verticale, mais qu'on a prévu également un léger mouvement de louvoiement vers l'extérieur, afin notamment de limiter les frottements contre les joints.

L'invention a notamment pour objectif de pallier ce risque.

Plus précisément, un objectif de l'invention est de fournir une technique permettant d'améliorer l'inviolabilité d'une porte de véhicule à vitre coulissante affleurante.

Un autre objectif de l'invention est, bien sûr, de conserver autant que faire se peut l'aspect affleurant de l'ensemble, et le résultat visuel de continuité apparente correspondant.

L'invention a également pour objectif de fournir une telle technique, qui présente un coup de revient réduit, et qui permet un montage simple et rapide.

Un autre objectif de l'invention est encore de fournir une telle technique, qui conserve ou améliore les aspects d'étanchéité de la porte et de déflection de l'air.

Un autre objectif de l'invention est encore de fournir une telle technique, qui apporte des solutions efficaces tant pour les vitres rectangulaires que les vitres trapézoidales.

Encore un autre objectif de l'invention est de fournir une telle technique, qui ne nécessite aucun mouvement de vitre lors de l'ouverture et/ou la fermeture de la porte.

Ces objectifs, ainsi que d'autres qui apparaîtront par la suite, sont atteints selon l'invention à l'aide d'une porte de véhicule automobile comprenant une vitre affleurante, mobile par rapport à un cadre que ladite vitre vient recouvrir en position fermée, ledit cadre portant une extension d'inviolabilité définissant une surface de contact ayant une section en forme de L renversée, contre laquelle viennent en appui le chant et le bord intérieur de la partie supérieure de ladite vitre, lorsqu'elle se trouve en position fermée.

Ainsi, on empêche, ou on rend à tout le moins plus difficile, une effraction (celle-ci laissant en tout état de cause une trace, puisqu'elle suppose la détérioration de l'extension), de façon simple et efficace, sans nuire (ou de façon très limitée, dans le cas particulier des vitres trapézoïdales par exemple) à l'aspect affleurant.

De façon avantageuse, ladite extension est solidarisée audit cadre par une portion d'accrochage venant chevaucher un élément du cadre s'étendant sensiblement perpendiculairement à ladite vitre.

Préférentiellement, ladite portion d'accrochage possède un premier élément de renfort interne.

Selon un mode de réalisation avantageux, ladite extension possède un second élément de renfort interne.

Lesdits premier et second éléments de renfort sont dans ce cas préférentiellement formés par une pièce unique.

On obtient ainsi un système très simple, et efficace, du fait de la présence du renfort.

Dans un mode de réalisation particulier, lesdits premier et second éléments de renfort sont métalliques.

Selon un premier aspect de l'invention, ladite extension est formée dans un élément d'étanchéité entre la partie supérieure de ladite porte et la carrosserie dudit véhicule.

Dans ce cas, ledit élément d'étanchéité présente avantageusement au moins une lèvre d'étanchéité venant en contact avec la carrosserie dudit véhicule.

De façon préférentielle, ladite porte comprend en outre un joint d'étanchéité de vitre s'étendant sous ladite extension.

Selon un premier mode de mise en oeuvre, correspondant par exemple à une porte arrière de véhicule, ladite vitre est de forme essentiellement rectangulaire.

Selon un deuxième mode de mise en oeuvre, correspondant par exemple à une porte avant de véhicule, ladite vitre est de forme essentiellement trapézoïdale, la largeur de la partie supérieure étant inférieure à la largeur de la partie inférieure, et ladite partie supérieure se prolongeant par au moins une partie inclinée.

Dans ce cas, ladite extension se prolonge avantageusement sur au moins une portion inclinée, correspondant à au moins une desdites parties inclinées de la vitre.

Préférentiellement, sur la ou lesdites portions inclinées, ladite extension présente un insert sortant, venant recouvrir légèrement le chant de ladite vitre, lorsque cette dernière est fermée.

De façon préférentielle, ledit insert est légèrement débordant pour recouvrir la périphérie extérieure de ladite vitre. Il s'agit là d'une légèrement dérogation à l'aspect affleurant, mais qui ne joue que sur quelques millimètres et peut être rendue très discrète. Cela permet de maintenir la vitre en position fermée, et d'éviter par exemple les vibrations.

Ledit insert peut notamment être intégré dans la continuité d'un rétroviseur.

Selon un mode de réalisation avantageux, ledit insert est surmoulé dans ladite extension.

De façon avantageuse, ladite extension est configurée pour assurer également une fonction de déflecteur.

En complément ou de façon alternative, on peut prévoir avantageusement un élément déflecteur d'air monté sur ladite carrosserie.

L'invention concerne également les extensions pour porte de véhicule automobile telles que décrites ci-dessus, et les véhicules automobiles correspondants, comprenant au moins une porte telle que présentée ci-dessus.

D'autres caractéristiques et avantages de l'invention apparaîtront à la lecture de la description suivante d'un mode de réalisation préférentiel de l'invention, donné à titre de simple exemple illustratif et non limitatif, et des dessins parmi lesquels :
- la figure 1 illustre de façon schématique l'emplacement de moyens d'inviolabilité selon l'invention dans le cas d'une vitre rectangulaire, par exemple pour une porte arrière ;
- la figure 2 est une vue en coupe de la section AA de la figure 1 :
- la figure 3 présente, de façon schématique, l'emplacement des moyens d'inviolabilité selon l'invention dans le cas d'une vitre trapézoidale, par exemple pour une porte avant ;
- la figure 4 est une vue en coupe de la section BB de la figure 3 :
- la figure 5 est une vue simplifiée de la partie visible du renfort de la figure 4.

L'invention propose donc une technique simple et efficace pour empêcher, ou à tout le moins rendre beaucoup plus difficile, l'introduction d'un outil, de tout autre objet le long d'une vitre coulissante et affleurante. Pour cela, on équipe le cadre intérieur d'un élément contre lequel le chant supérieur et la périphérie intérieure correspondante de la vitre viendront prendre appui, en position fermée. Cet élément fait avantageusement partie des moyens d'étanchéité de porte.

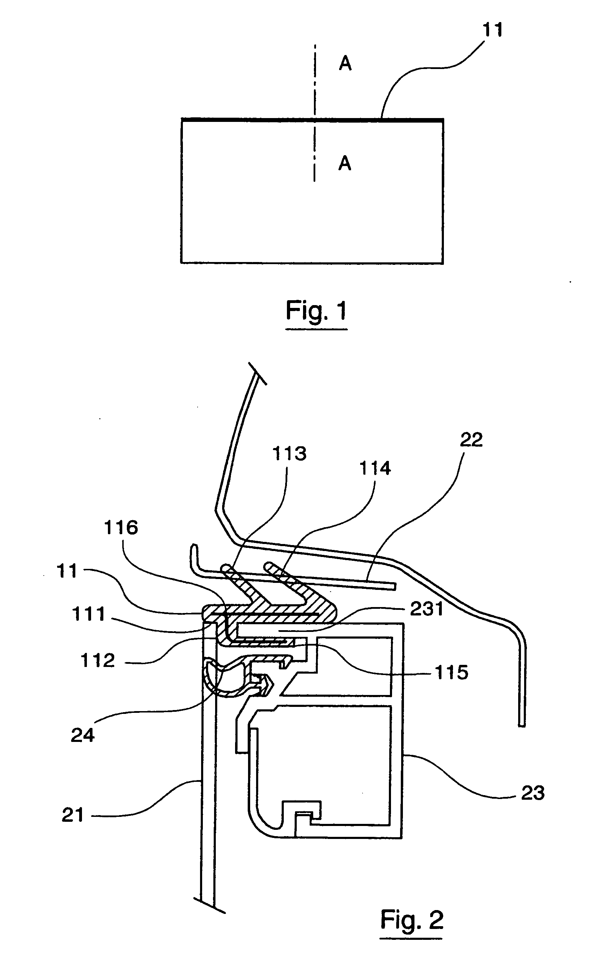

La figure 1 illustre de façon schématique le cas d'une vitre rectangulaire, par exemple pour une porte arrière. Les moyens d'inviolabilité 11 s'étendent alors sur le cadre de la porte, de façon à recevoir toute la longueur supérieure de la vitre.

Comme on le voit sur la figure 2, qui est une vue en coupe de la section AA de la figure 1, cet élément 11 comprend une partie de contact avec la vitre 21, lorsque celle-ci est en position fermée, qui définit une forme générale de L.

Plus précisément, une partie 111 vient en contact avec le chant de la vitre 21 et une partie 112 en contact avec la périphérie supérieure de la vitre 21.

L'élément 11 assure également l'étanchéité de porte, à l'aide de deux lèvres 113 et 114 qui viennent en contact avec un élément de carrosserie 22, lorsque la porte est fermée. L'élément 11 est monté sur le cadre de fenêtre 23, à l'aide d'une portion 115 définissant un cavalier, qui vient chevaucher une extension 231 du cadre prévu à cet effet.

L'élément 11 assure ainsi une double fonction d'étanchéité de porte et d'inviolabilité de la vitre. Il comprend préférentiellement un renfort 116, par exemple métallique. Il est avantageusement dessiné de façon à suiver la forme du cavalier, et à renforcer la partie 111 recevant le chant de la vitre.

On obtient ainsi un système relativement simple à fabriquer, puisqu'il s'agit d'une adaptation du joint d'étanchéité de porte, et facile à monter. L'aspect affleurant de la porte n'est pas altéré.

Il n'est pas possible de tenter d'entrouvrir la vitre, par effraction, sans destruction visible du joint.

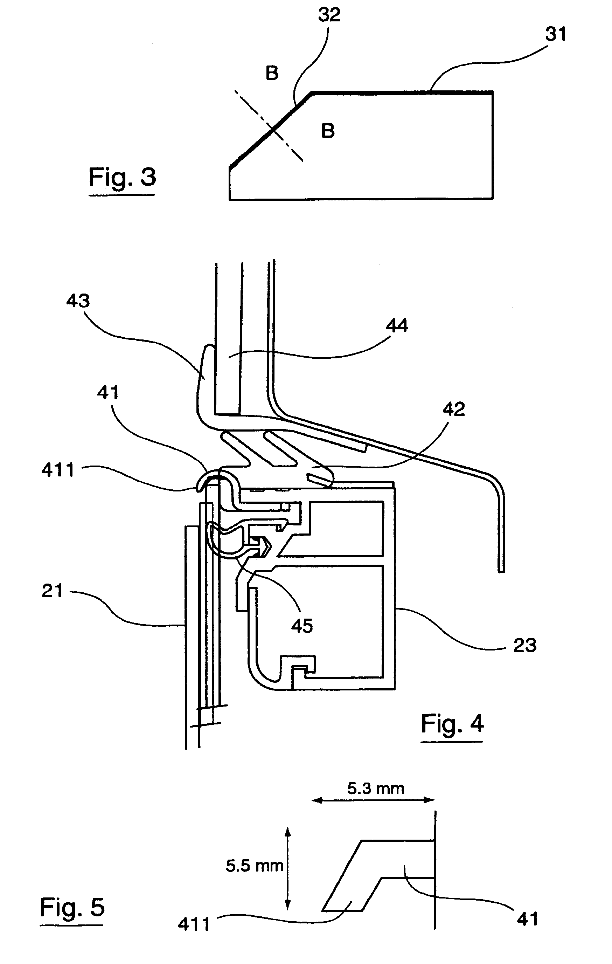

Dans le cas d'une vitre trapézoïdale, par exemple pour une porte avant, comme illustré en figure 3, on distingue deux points. Une partie horizontale 31, qui peut être traitée exactement de la même façon que déjà expliqué à partir de la figure 2 et une partie inclinée 32, à laquelle un traitement spécifique doit être appliqué.

La figure 4 est une vue en coupe de la section BB, précisant cet aspect.

Sur la partie inclinée, on prévoit un élément qui vient légèrement chevaucher la vitre mobile 21, lorsque celle-ci est en position fermée. Cet élément peut se présenter sous la forme d'un insert, par exemple métallique, et surmoulé sur le joint de double étanchéité de porte 42. Ce dernier est monté sur le cadre de porte 23, de la même façon que décrit précédemment, et peut avantageusement être formé dans le même élément de joint.

Selon un mode de réalisation préféré de l'invention, la vitre mobile a un double mouvement de translation vers le bas et de louvoiement, qui assure un léger décalage de la vitre vers l'extérieur lors de son ouverture, et réciproquement, comme illustré sur la figure 4, où on a représenté trois positions successives de cette vitre 21. Ce louvoiement est assuré par exemple par des patins sur la partie verticale de chaque montant.

La partie verticale du montant avant étant très courte, puisqu'il ne se prolonge pas bien sûr sur la partie inclinée, il apparaît souhaitable de prévoir des moyens venant tenir la vitre sur toute la partie inclinée, en position fermée. Cette fonction est assurée par l'extrémité 411 de l'insert 41, qui chevauche le chant de la vitre et assure non seulement l'inviolabilité, mais également le maintien efficace de la vitre fermée pendant le roulage. On évite ainsi les vibrations et on offre une bonne résistance aux efforts aérodynamiques.

Dans une version simplifiée, le retour 411 peut bien sûr être supprimé, de façon à garder un aspect complètement affleurant.

Dans le cas contraire, illustré de façon plus précise par la figure 5, l'aspect affleurant n'est pas complètement conservé sur cette zone, mais peut être rendu très peu visible.

En effet, les dimensions sont réduites et peuvent être par exemple d'une largeur de 5,3 mm et d'une hauteur de 5,5 mm. Dans ce cas, l'ensemble ne dépasse que d'un ou deux millimètres. En outre, cette approche permet d'éviter la mise en place d'un système en saillie qui serait solidaire de la vitre, et qui pourrait d'une part s'avérer dangereux pour les passagers, et d'autre part abîmerait les joints lécheurs, lors de l'ouverture et de la fermeture de la vitre.

Par ailleurs, la partie visible du renfort, qui est minimale, peut être traitée pour que son aspect visuel soit très peu visible, par exemple en l'intégrant dans la continuité du support de rétroviseur et/ou en l'atténuant par une couleur pouvant par exemple se rapprocher de celle de la sérigraphie (laqué noir).

On notera par ailleurs que cette technique présente l'avantage de ne pas nécessiter de mouvement de la vitre lors de l'ouverture ou de la fermeture de la porte.

Cet élément peut par ailleurs assurer une fonction de déflecteur d'air, à l'ouverture de la vitre. Cette fonction peut avantageusement être amplifiée par un déflecteur d'air complémentaire 43 monté sur le dormant 44 de la carrosserie. On notera d'ailleurs qu'un tel déflecteur d'air peut également être prévu, de la même façon, pour la partie supérieure horizontale illustrée par la figure 2.

On notera également que, dans les deux cas, on prévoit également un joint d'étanchéité de vitre, respectivement 24 et 45, monté sur le cadre 23, et s'étendant sous les moyens d'inviolabilité décrits précédemment.

Enfin, on notera que les renforts de joint 116 et les inserts 41 ne sont pas obligatoirement métalliques mais peuvent être réalisés à l'aide d'autres matériaux présentant les caractéristiques souhaitées.

Le mode de réalisation décrit concerne une vitre se déplaçant verticalement. L'invention peut cependant s'appliquer de la même façon à des vitres se déplaçant dans d'autres directions, par exemple horizontalement.

## Revendications

1. Porte de véhicule automobile comprenant une vitre affleurante (21), mobile par rapport à un cadre (23) que ladite vitre vient recouvrir en position fermée,
**caractérisée en ce que** ledit cadre porte une extension d'inviolabilité (11) définissant une surface de contact ayant une section en forme de L renversée, contre laquelle viennent en appui le chant (111) et le bord intérieur (112) de la partie supérieure de ladite vitre, lorsqu'elle se trouve en position fermée.

2. Porte de véhicule selon la revendication 1, **caractérisée en ce que** ladite extension est solidarisée audit cadre par une portion d'accrochage (115) venant chevaucher un élément du cadre (231) s'étendant sensiblement perpendiculairement à ladite vitre.

3. Porte de véhicule selon la revendication 2, **caractérisée en ce que** ladite portion d'accrochage possède un premier élément de renfort interne (116).

4. Porte de véhicule selon l'une quelconque des revendications 1 à 3, **caractérisé en ce que** ladite extension possède un second élément de renfort interne.

5. Porte de véhicule selon les revendications 3 et 4, **caractérisée en ce que** lesdits premier et second éléments de renfort sont formés par une pièce unique.

6. Porte de véhicule selon l'une quelconque des revendications 3 à 5, **caractérisée en ce que** lesdits premier et second éléments de renfort sont métalliques.

7. Porte de véhicule selon l'une quelconque des revendications 1 à 6, **caractérisée en ce que** ladite extension est formée dans un élément d'étanchéité entre la partie supérieure de ladite porte et la carrosserie (22) dudit véhicule.

8. Porte de véhicule selon la revendication 7, **caractérisée en ce que** ledit élément d'étanchéité présente au moins une lèvre d'étanchéité (113, 114) venant en contact avec la carrosserie dudit véhicule.

9. Porte de véhicule selon l'une quelconque des revendications 1 à 8, **caractérisée en ce qu'**elle comprend en outre un joint d'étanchéité (24) de vitre s'étendant sous ladite extension.

10. Porte de véhicule selon l'une quelconque des revendications 1 à 9, **caractérisée en ce que** ladite vitre est de forme essentiellement rectangulaire.

11. Porte de véhicule selon l'une quelconque des revendications 1 à 9, **caractérisée en ce que** ladite vitre est de forme essentiellement trapézoïdale, la largeur de la partie supérieure étant inférieure à la largeur de la partie inférieure, et ladite partie supérieure se prolongeant par au moins une partie inclinée.

12. Porte de véhicule selon la revendication 11, **caractérisée en ce que** ladite extension se prolonge sur au moins une portion inclinée, correspondant à au moins une desdites parties inclinées de la vitre.

13. Porte de véhicule selon la revendication 12, **caractérisée en ce que**, sur la ou lesdites portions inclinées, ladite extension présente un insert sortant, venant recouvrir légèrement le chant de ladite vitre, lorsque cette dernière est fermée.

14. Porte de véhicule selon la revendication 13, **caractérisée en ce que** ledit insert est légèrement débordant pour recouvrir la périphérie extérieure de ladite vitre.

15. Porte de véhicule selon l'une quelconque des revendications 13 et 14, **caractérisée en ce que** ledit insert est surmoulé dans ladite extension.

16. Porte de véhicule selon l'une quelconque des revendications 12 à 15, **caractérisée en ce que** ledit insert est intégré dans la continuité d'un rétroviseur.

17. Porte de véhicule selon l'une quelconque des revendications 1 à 16, **caractérisée en ce que** ladite extension est configurée pour assurer également une fonction de déflecteur.

18. Porte de véhicule selon l'une quelconque des revendications 1 à 17, **caractérisée en ce qu'**elle coopère avec un élément déflecteur d'air monté sur ladite carrosserie.

19. Extension (11) pour porte de véhicule automobile comprenant une vitre affleurante (21), mobile par rapport à un cadre (23) que ladite vitre vient recouvrir en position fermée, portée par ledit cadre et définissant une surface de contact ayant une section en forme de L, contre laquelle viennent en appui le chant (111) et la périphérie (112) tournée vers l'intérieur dudit véhicule de la partie supérieure de ladite vitre, lorsqu'elle se trouve en position fermée.

20. Véhicule automobile **caractérisé en ce qu'**il comprend au moins une porte de véhicule automobile comprenant une vitre affleurante (21), mobile par rapport à un cadre (23) que ladite vitre vient recouvrir en position fermée,
ledit cadre portant une extension définissant une surface de contact ayant une section en forme de L, contre laquelle viennent en appui le chant (111) et la périphérie (112) tournée vers l'intérieur dudit véhicule de la partie supérieure de ladite vitre, lorsqu'elle se trouve en position fermée.

## Claims

1. Motor vehicle door comprising a flush-fitting window (21) which is movable in relation to a frame (23) that the said window covers when in the closed position, **characterised in that** the said frame carries an anti-intrusion extension (11) which defines a contact surface having a cross-section in the shape of an inverted L, against which the rim (111) and the internal edge (112) of the upper part of the said window bear when it is in the closed position.

2. Vehicle door according to claim 1, **characterised in that** the said extension is fastened to the said frame by a coupling portion (115) which straddles an element of the frame (231) that extend substantially perpendicularly to the said window.

3. Vehicle door according to claim 2, **characterised in that** the said coupling portion possesses a first internal reinforcing element (116).

4. Vehicle door according to any of claims 1 to 3, **characterised in that** the said extension possesses a second internal reinforcing element.

5. Vehicle door according to claims 3 and 4, **characterised in that** the said first and second reinforcing elements are formed by a single piece.

6. Vehicle door according to any of claims 3 to 5, **characterised in that** the said first and second reinforcing elements are metal elements.

7. Vehicle door according to any of claims 1 to 6, **characterised in that** the said extension is formed in a sealing element between the upper part of the said door and the body (22) of the said vehicle.

8. Vehicle door according to claim 7, **characterised in that** the said sealing element has at least one sealing lip (113, 114) which comes into contact with the body of the said vehicle.

9. Vehicle door according to any of claims 1 to 8, **characterised in that** it further comprises a window seal (24) which extends below the said extension.

10. Vehicle door according to any of claims 1 to 9, **characterised in that** the said window is essentially rectangular in shape.

11. Vehicle door according to any of claims 1 to 9, **characterised in that** the said window is essentially trapezoidal in shape, the width of the upper part being less than the width of the lower part, and the said upper part being prolonged by at least one inclined part.

12. Vehicle door according to claim 11, **characterised in that** the said extension is prolonged over at least one inclined portion which corresponds to at least one of the said inclined parts of the window.

13. Vehicle door according to claim 12, **characterised in that**, over the said inclined portion or portions, the said extension has an outgoing insert that slightly covers the rim of the said window when the latter is closed.

14. Vehicle door according to claim 13, **characterised in that** the said insert protrudes slightly in order to cover the outer periphery of the said window.

15. Vehicle door according to either of claims 13 or 14, **characterised in that** the said insert is over-moulded within the said extension.

16. Vehicle door according to any of claims 12 to 15, **characterised in that** the said insert is integrated into the continuation of a rear-view mirror.

17. Vehicle door according to any of claims 1 to 16, **characterised in that** the said extension is configured to also perform the function of a quarter-light.

18. Vehicle door according to any of claims 1 to 17 **characterised in that** it cooperates with an air-deflecting element mounted on the said body.

19. Extension (11) for a motor vehicle door, said extension comprising a flush-fitting window (21) which is movable in relation to a frame (23) that the said window covers when in the closed position, and which is carried by the said frame and defines a contact surface having an L-shaped cross-section, against which the rim (111) and the periphery (112), that faces towards the interior of the said vehicle, of the upper part of the said window bear when said window is in the closed position.

20. Motor vehicle **characterised in that** it comprises at least one motor vehicle door comprising a flush-fitting window (21) which is movable in relation to a frame (23) that the said window covers when in the closed position, the said frame carrying an extension which defines a contact surface having an L-shaped cross-section, against which the rim (111) and the periphery (112), that faces towards the interior of the said vehicle, of the upper part of the said window bear when the latter is in the closed position.

## Patentansprüche

1. Kraftfahrzeugtür, eine bündige Fensterscheibe (21) umfassend, die bezüglich eines Rahmens (23) beweglich ist, welchen die Fensterscheibe in der geschlossenen Position abdeckt,
**dadurch gekennzeichnet, dass** der Rahmen ein Unüberwindbarkeits-Ansatzstück (11) trägt, das eine Kontaktfläche mit einem Querschnitt von der Form eines umgekehrten L definiert, an welcher die Kante (111) und der innere Rand (112) des oberen Teils der Fensterscheibe zur Anlage kommen, wenn diese sich in der geschlossenen Position befindet.

2. Fahrzeugtür nach Anspruch 1, **dadurch gekennzeichnet, dass** das Ansatzstück mit dem Rahmen durch einen Rastabschnitt (115) fest verbunden ist, der ein Element (231) des Rahmens umgreift, das sich im Wesentlichen senkrecht zu der Glasscheibe erstreckt.

3. Fahrzeugtür nach Anspruch 2, **dadurch gekennzeichnet, dass** der Rastabschnitt ein erstes inneres Verstärkungselement (116) besitzt.

4. Fahrzeugtür nach einem der Ansprüche 1 bis 3, **dadurch gekennzeichnet, dass** das Ansatzstück ein zweites inneres Verstärkungselement besitzt.

5. Fahrzeugtür nach den Ansprüchen 3 und 4, **dadurch gekennzeichnet, dass** das erste und das zweite Verstärkungselement von einem einzigen Teil gebildet werden.

6. Fahrzeugtür nach einem der Ansprüche 3 bis 5, **dadurch gekennzeichnet, dass** das erste und das zweite Verstärkungselement metallisch sind.

7. Fahrzeugtür nach einem der Ansprüche 1 bis 6, **dadurch gekennzeichnet, dass** das Ansatzstück in einem Dichtungselement zwischen dem oberen Teil der Tür und der Karosserie (22) des Fahrzeugs ausgebildet ist.

8. Fahrzeugtür nach Anspruch 7, **dadurch gekennzeichnet, dass** das Dichtungselement mindestens eine Dichtlippe (113, 114) aufweist, die mit der Karosserie des Fahrzeugs in Kontakt kommt.

9. Fahrzeugtür nach einem der Ansprüche 1 bis 8, **dadurch gekennzeichnet, dass** sie außerdem eine Fensterscheibendichtung (24) umfasst, die sich unter dem Ansatzstück erstreckt.

10. Fahrzeugtür nach einem der Ansprüche 1 bis 9, **dadurch gekennzeichnet, dass** die Fensterscheibe eine im Wesentlichen rechteckige Form aufweist.

11. Fahrzeugtür nach einem der Ansprüche 1 bis 9, **dadurch gekennzeichnet, dass** die Fensterscheibe eine im Wesentlichen trapezförmige Form aufweist, wobei die Breite des oberen Teils kleiner als die Breite des unteren Teils ist und wobei der obere Teil sich durch mindestens einen geneigten Teil verlängert.

12. Fahrzeugtür nach Anspruch 11, **dadurch gekennzeichnet, dass** das Ansatzstück sich zu mindestens einem geneigten Abschnitt fortsetzt, der mindestens einem der geneigten Teile der Fensterscheibe entspricht.

13. Fahrzeugtür nach Anspruch 12, **dadurch gekennzeichnet, dass** das Ansatzstück auf dem oder den geneigten Abschnitten einen herausragenden Einsatz aufweist, der die Kante der Fensterscheibe leicht abdeckt, wenn diese Letztere geschlossen ist.

14. Fahrzeugtür nach Anspruch 13, **dadurch gekennzeichnet, dass** der Einsatz leicht vorstehend ist, um den Außenumfang der Fensterscheibe abzudecken.

15. Fahrzeugtür nach einem der Ansprüche 13 und 14, **dadurch gekennzeichnet, dass** der Einsatz in dem Ansatzstück umspritzt ist.

16. Fahrzeugtür nach einem der Ansprüche 12 bis 15, **dadurch gekennzeichnet, dass** der Einsatz in den sich an einen Rückspiegel anschließenden Bereich integriert ist.

17. Fahrzeugtür nach einem der Ansprüche 1 bis 16, **dadurch gekennzeichnet, dass** das Ansatzstück dafür konfiguriert ist, auch die Funktion eines Abweisers zu erfüllen.

18. Fahrzeugtür nach einem der Ansprüche 1 bis 17, **dadurch gekennzeichnet, dass** sie mit einem Abweiser-Element zusammenwirkt, das an der Karosserie angebracht ist.

19. Ansatzstück (11) für eine Kraftfahrzeugtür, die eine bündige Fensterscheibe (21) umfasst, die bezüglich eines Rahmens (23) beweglich ist, welchen die Fensterscheibe in der geschlossenen Position abdeckt, welches von dem Rahmen getragen wird und eine Kontaktfläche mit einem Querschnitt von der Form eines L definiert, an welcher die Kante (111) und der dem Inneren des Fahrzeugs zugewandte Umfang (112) des oberen Teils der Fensterscheibe zur Anlage kommen, wenn diese sich in der geschlossenen Position befindet.

20. Kraftfahrzeug, **dadurch gekennzeichnet, dass** es mindestens eine Kraftfahrzeugtür umfasst, die eine bündige Fensterscheibe (21) umfasst, die bezüglich eines Rahmens (23) beweglich ist, welchen die Fensterscheibe in der geschlossenen Position abdeckt,
wobei der Rahmen ein Ansatzstück trägt, das eine Kontaktfläche mit einem Querschnitt von der Form eines L definiert, an welcher die Kante (111) und der dem Inneren des Fahrzeugs zugewandte Umfang (112) des oberen Teils der Fensterscheibe zur Anlage kommen, wenn diese sich in der geschlossenen Position befindet.
